# EUROPÄISCHE PATENTSCHRIFT

(11) **EP 3 292 603 B1**
(45) Veröffentlichungstag und Bekanntmachung des Hinweises auf die Patenterteilung: **29.09.2021**
(21) Anmeldenummer: 16721786.8
(22) Anmeldetag: 06.05.2016
(51) Int. Cl.: H02G 3/06, H02G 3/08, F16L 5/02, H02G 3/22

(54) **KABEL-/LEITUNGSEINFÜHRUNG**
CABLE/LEAD INSERTION UNIT
ENTRÉE DE LIGNE/CÂBLE

(30) Priorität: 06.05.2015 DE 102015208395
(43) Veröffentlichungstag der Anmeldung: 14.03.2018
(73) Patentinhaber: Eaton Protection Systems IP GmbH & Co. KG, 12529 Schönefeld (DE)
(72) Erfinder: NAUMANN, Reiner, 68239 Mannheim (DE); SAUER, Dieter, 69434 Heddesbach (DE)
(74) Vertreter: BRP Renaud & Partner mbB Rechtsanwälte Patentanwälte Steuerberater
(86) Internationale Anmeldenummer: PCT/EP2016/060144
(87) Internationale Veröffentlichungsnummer: WO 2016/177863

(56) Entgegenhaltungen:
- EP-A2- 0 604 117
- EP-A2- 2 858 190
- WO-A1-2013/159496
- DE-A1- 3 731 149
- DE-A1-102010 061 067
- DE-U1- 8 107 172
- DE-U1-202004 005 457
- DE-U1-202009 009 807
- FR-A1- 2 583 496
- US-A- 4 050 721
- US-A- 6 102 442
- US-A1- 2015 069 750

## Beschreibung

Die Erfindung betrifft eine Kabel-/Leitungseinführung zum Ein- und Durchführen wenigstens einer Leitung in und durch eine Wandöffnung einer Gehäusewand. Solche Kabel-/Leitungseinführungen werden insbesondere als Ex-Einführungen verwendet, um beispielsweise Kabel oder Leitungen in Klemmkästen, Abzweigdosen, Leuchtengehäuse, Befehlsgeräte, Messinstrumente oder dergleichen hineinzuführen. Eine entsprechende Kabel-/Leitungsführung weist zumindest eine Einführhülse zum Einstecken in die entsprechende Gehäuseöffnung der Wandfläche, einen von dieser Einführhülse zumindest stellenweise radial nach außen abstehenden Anlageflansch, ein in Richtung Anlageflansch auf die Einführhülse insbesondere aufschraubbares Klemmteil und einen gegenüberliegend zum Klemmteil angeordneten Befestigungsabschnitt der Einführhülse auf. Die Einführhülse wird soweit in die entsprechende Gehäuseöffnung eingesteckt, bis der entsprechende Anlageflansch am Öffnungsrand anliegt. Zusammen mit dem Einstecken erfolgt bei aus der Praxis bekannten Kabel-/Leitungseinführungen ein Verschrauben des Befestigungsabschnitts mit einem entsprechenden Gewinde, das in der Wandöffnung ausgebildet ist. Mittels des entsprechenden Klemmteils erfolgt ein Verklemmen der Kabel/Leitungen innerhalb der Einführhülse, beispielsweise über irisförmig angeordnete Klemmlammellen oder dergleichen. Durch das Verklemmen der Kabel/Leitungen innerhalb der Einführhülse erfolgt gleichzeitig eine entsprechende Zugentlastung.

Nachteilig bei dieser aus der Praxis vorbekannten Kabel-/Leitungseinführung ist, dass eine entsprechende Befestigung der Einführung innerhalb der Wandöffnung über Gewinde erfolgt. Solche Gewinde müssen mit hoher Genauigkeit hergestellt werden und erfordern außerdem ein Verdrehen zumindest der Einführhülse relativ zur Gehäusewand. Dies ist relativ zeitaufwendig, insbesondere bei einer Mehrzahl von Kabel-/Leitungseinführungen, die gegebenenfalls bei dem entsprechenden Gehäuse zum Einsatz kommen. Insbesondere im Ex-Bereich sind höhere Anforderungen an solche Gewinde gestellt, um entsprechende elektrische Betriebsmittel in explosionsgefährdeten Bereichen einsetzen zu können.

Es wird auf FR 2 583 496 A1 hingewiesen, welche eine modulare Stopfbuchse zum Halten einer elektrischen Leitung, einer Röhre, eines Kabels, einer Stange oder dergleichen, die durch eine Wand verläuft, zeigt. Die Stopfbuchse weist dabei einen rohrförmigen Körper auf, der eine kompressible Dichtung umschließt, die durch ein ringförmiges Druckelement gepresst wird, wobei der Körper Mittel aufweist, die eine starre Verbindung mit mehreren austauschbaren komplementären Elementen zum Halten der Stopfbuchse an der Wand und / oder zum Halten der Leitung ermöglichen. Ferner zeigt die EP 0 604 117 A2 eine Kabel/-Leitungseinführung gemäß dem Oberbegriff des Anspruchs 1.

Der Erfindung liegt die Aufgabe zugrunde, eine Kabel-/Leitungseinführung der eingangs genannten Art dahingehend zu verbessern, dass insbesondere auch zum Einsatz in explosionsgefährdeten Bereichen, eine schnelle Montage der Kabel-/Leitungseinführung mit einfachen Mitteln möglich ist.

Diese Aufgabe wird durch die Merkmale des Patentanspruchs 1 gelöst. Insbesondere zeichnet sich die Erfindung dadurch aus, dass der Befestigungsabschnitt auf seiner Außenseite einen teilweise umlaufenden Gewindegang aufweist, mit welchem zum Anpressen des Anlageflansches an den Öffnungsrand ein Spannstück in Eingriff bringbar ist. Dieses Spannstück wird in der Regel vom Inneren des Gehäuses her auf den entsprechenden Befestigungsabschnitt aufgesetzt und mit dem Gewindegang unter Anpressen des Anlageflansches an den Öffnungsrand in Eingriff gebracht. Ein Verdrehen der entsprechenden Einführhülse zum Verschrauben mit einem in der Wandöffnung ausgebildeten Gewinde ist nicht notwendig. Außerdem wird durch die Verwendung des einen Gewindegangs die Befestigung des Spannstücks vereinfacht und ist mit nur geringem Zeitaufwand möglich. Die entsprechende Einführhülse wird einfach mit Ihrem Befestigungsabschnitt durch die Gehäuseöffnung geschoben und auf dem im Inneren des Gehäuses vorstehenden Teil des Befestigungsabschnitts wird das Spannstück aufgesetzt und unter Anpressen des Anlageflansches an den Öffnungsrand angebracht.

Es ist denkbar, dass der teilweise umlaufende Gewindegang beispielsweise als ein Teilgewindegang ausgebildet ist, der sich in Umfangsrichtung der Einführhülse um weniger als 180° erstreckt. Außerdem besteht die Möglichkeit, dass der Gewindegang aus wenigstens zwei Gewindegangabschnitten gebildet ist. Diese laufen ebenfalls nur teilweise in Umfangsrichtung um die Einführhülse um. Nach Aufstecken des entsprechenden Spannstücks ist dieses mit dem einen oder auch mit beiden dieser Gewindegangabschnitte in Eingriff bringbar.

Die Gewindegangabschnitte können in unterschiedliche Weise auf der Außenseite der Einführhülse angeordnet sein. Eine mögliche Anordnung kann darin gesehen werden, dass die Gewindegangabschnitte beispielsweise in Längsrichtung der Einführhülse und gegebenenfalls auch in Umfangsrichtung der Einführhülse beabstandet voneinander angeordnet sind. Bei einem einfachen Ausführungsbeispiel können die Gewindegangabschnitte auch nur beabstandet in Umfangsrichtung angeordnet sein. Bei einem weiteren denkbaren Ausführungsbeispiel können diese Gewindegangabschnitte im Wesentlichen in Umfangrichtung beabstandet und wendelförmig hintereinander angeordnet sein.

Durch die geringe Anzahl der Gewindegangabschnitte kann ein einfaches Befestigen des Spannstücks erfolgen, wobei gleichzeitig nur eine geringe Drehung des Spannstücks relativ zu den Gewindegangabschnitten notwendig ist, um eine ausreichende Anpresskraft zum Anpressen des Anlageflansches an den Öffnungsrand zu erhalten.

Bei einem einfachen Ausführungsbeispiel kann das Spannstück als hülsenförmiges Spannstück ausgebildet sein, welches auf seiner Hülseninnenseite wenigstens zwei mit den Gewindegangabschnitten in Eingriff bringbare Gegengewindeabschnitte aufweist. Diese sind analog zu den Gewindegangabschnitten auf der Außenseite der Einführhülse und auf der Hülseninnenseite des Spannstücks angeordnet.

Um in diesem Zusammenhang ein einfaches Aufstecken des Spannstücks auf den Befestigungsabschnitt der Einführhülse zu ermöglichen, können Abstände zwischen den Gewindegangabschnitten größer als eine entsprechende Länge eines Gegengewindeabschnitts sein. Auf diese Weise können die Gegengewindeabschnitte zwischen den Lücken der Gewindeabschnitte durchgeführt und anschließend durch Verdrehen des Spannstücks mit den Gewindegangabschnitten in Eingriff gebracht werden. Dazu ist in der Regel nur eine geringe Drehung des Spannstücks um beispielsweise 30° bis 90° erforderlich.

Um auch im Hinblick auf Ex-Bereiche eine ausreichende Abdichtung der Kabel-/Leitungseinführung relativ zum Gehäuse zu ermöglichen, kann der Anlageflansch eine in Richtung Öffnungsrand offene Dichtnut aufweisen. In diese ist beispielsweise ein O-Ring oder dergleichen einlegbar. Die entsprechende Abdichtung erfolgt ebenfalls durch das Anbringen des Spannstücks und das dadurch erfolgende Anpressen des Anlageflansches an die Gehäusewand beziehungsweise an den Öffnungsrand. Selbstverständlich ist auch denkbar, dass mehrere solcher Dichtnuten beispielsweise konzentrisch zueinander am Anlageflansch ausgebildet sein können. Ebenfalls denkbar ist das Anbringen einer solchen Dichtnut direkt in der Gehäusewand beziehungsweise im Öffnungsrand oder das Anbringen von Dichtnuten sowohl am Anlageflansch als auch am Öffnungsrand.

Um das Klemmteil in einfacher Weise auf der Einführhülse anbringen zu können, kann das Klemmteil als auf die Einführhülse aufschraubbare Mutter ausgebildet sein.

Bei einem einfachen Ausführungsbeispiel mit weiteren Vorteilen kann die Mutter eine Hutmutter sein und in dieser eine insbesondere verformbare Leitungsdichthülse anordbar sein. Auch bei vorliegender Erfindung kann eine entsprechende Abdichtung der Kabel beziehungsweise Leitungen durch irisförmig angeordnete Klemmlamellen am der Mutter zugeordneten Ende der Einführhülse ausgebildet sein. Alternativ zu diesen Klemmlamellen oder auch zusätzlich zu diesen kann allerdings auch die Leitungsdichthülse angeordnet werden. Diese wird bei Aufschrauben der Hutmutter insbesondere radial nach innen verformt und verklemmt die entsprechenden Kabel beziehungsweise Leitungen in der Kabel-/Leitungseinführung. Durch das Verklemmen ergibt sich außerdem gleichzeitig eine entsprechende Zugentlastung.

In einfacher Weise kann ein solches Verklemmen mittels der Leitungsdichthülse dadurch erfolgen, dass die Leitungsdichthülse bei aufgeschraubter Hutmutter mit ihrem Innenende mit einer Stirnseite der Einführhülse in Anlage ist und mit ihrem entsprechenden Außenende mit der Hutmutter in Anlage ist, sodass bei entsprechend aufgeschraubter Hutmutter die Verformung der Leitungsdichthülse durch Zusammendrücken erfolgt.

Um gegebenenfalls zusätzlich eine Losdrehsicherung oder Verliersicherung bei dem Anbringen des Spannstücks zu erhalten, kann ein Sicherungsblech zur Anordnung zwischen Spannstück und Gehäusewand auf der Einführhülse aufgesteckt sein. Andere Sicherungsmaßnahmen sind ebenfalls denkbar, wie Anbringen einer Verzahnung auf einer entsprechenden Unterseite des Spannstücks, Einsatz einer Schnorrscheibe oder dergleichen. Ein Sicherungsblech ist allerdings eine sehr einfache Möglichkeit für eine solche Verlier- und/oder Losdrehsicherung.

Um das Sicherungsblech einer bestimmten Position festlegen zu können, kann das Sicherungsblech eine in eine Sicherungsöffnung der Gehäusewand einsteckbare Sicherungsnase aufweisen.

Um gegebenenfalls die Einführhülse beim Aufstecken und anschließendem Verdrehen des Spannstücks zusätzlich sichern zu können, kann die Einführhülse einen radial nach außen abstehenden Schraubflansch aufweisen. Dieser kann beispielsweise durch ein entsprechendes Werkzeug in seiner Stellung fixiert werden, während von der Innenseite des Gehäuses her das Spannstück angebracht und befestigt wird.

Bei einem einfachen Ausführungsbeispiel kann außerdem der Schraubflansch einteilig mit dem Anlageflansch ausgebildet sein, wobei der Anlageflansch direkt dem Öffnungsrand zuordbar ist, während der Schraubflansch in Längsrichtung der Einführhülse zwischen Anlageflansch und Klemmteil angeordnet ist. Es ist ebenfalls denkbar, dass der Anlageflansch auch direkt als Schraubflansch ausgebildet ist.

Beim Anbringen des Spannstücks kann dieses ebenfalls in Anlage mit dem Öffnungsrand von der Innenseite des Gehäuses her geraten, wozu beispielsweise das Spannstück einen zumindest teilweise umlaufenden Anlagerand zur Anlage an der Gehäusewand und insbesondere am Öffnungsrand aufweist. D. h., nach Anbringen des Spannstücks wird auf beiden Seiten auf den Öffnungsrand gepresst, von einer Seite her durch den Anlageflansch und von der anderen Seite her durch den Anlagerand.

Um gegebenenfalls von der Innenseite her eine zusätzliche Eingriffsmöglichkeit in einen Spalt zwischen Einführhülse und Gehäusewandöffnung zu ermöglichen, kann der Anlagerand zumindest einen Eingriffsabschnitt zum Eingriff in die Wandöffnung zwischen Einführhülse und Öffnungsrand aufweisen.

Wie bereits ausgeführt, wird die erfindungsgemäße Kabel-/Leitungseinführung insbesondere im Ex-Bereich eingesetzt und kann insbesondere als Ex-d- oder Ex-e-Kabel/Leitungseinführung ausgebildet sein.

Die Zündschutzart "d" entspricht der druckfesten Kapselung. Das bedeutet, dass zwar in ein entsprechendes Gehäuse eines elektrischen Betriebsmittels eine explosionsfähige Atmosphäre eindringen kann, aber bei einer Explosion innerhalb des Gehäuses eine Übertragung der Explosion auf die das Gehäuse umgebende explosionsfähige Atmosphäre verhindert ist.

Bei der Zündschutzart "e" liegt der Geräteschutz "erhöhte Sicherheit" vor. Dies bedeutet, dass bei entsprechenden elektrischen Verbindungen durch Kabel oder Leitungen diese während eines Klemmvorgangs oder nach dem Einführen in ein entsprechendes Gehäuses sich nicht aus der vorgesehenen Position lösen können, dass ein Selbstlockern sicher verhindert ist und außerdem ein ausreichender Kontaktdruck ohne Beschädigung der Kabel beziehungsweise Leitungen sicher gestellt ist. Dieser Kontaktdruck soll sich auch bei entsprechenden im Betrieb auftretenden Temperaturänderungen nicht nennenswert verschlechtern.

In gewissen Fällen kann es notwendig sein, die Kabel-/Leitungseinführung zu ersetzen, weil diese oder ein Teil von dieser beschädigt ist. Um dabei zu verhindern, dass beispielsweise die entsprechenden Leitungen von der elektrischen oder elektronischen Vorrichtung getrennt werden müssen, um eine neue Kabel-/Leitungseinführung anzuordnen, werden die entsprechenden Teile und insbesondere Einführhülse, Klemmteil, Spannstück, und Leitungsdichthülse aus wenigstens zwei im Wesentlichen in Axialrichtung der Kabel-/Leitungseinführung geteilten Einzelelementen zusammengesetzt. Entlang entsprechender Trennkanten dieser Einzelelemente sind zu deren positionsgenauem Zusammensetzen Führungs- und/oder Positioniermittel angeordnet. Dadurch besteht die Möglichkeit, ohne Lösen entsprechender Kabel oder Leitungen eine Kabel-/Leitungseinführung durch eine neue zu ersetzen, indem die entsprechenden Einzelelemente auf Kabel oder Leitung aufgesetzt und miteinander verbunden werden.

Die entsprechenden Teilelemente sind dabei so ausgeführt, dass die Kabel-/Leitungseinführung für explosionsgefährdete Bereiche einsetzbar ist. Bei einem einfachen Ausführungsbeispiel hierzu sind die entsprechenden Führungs- und/oder Positioniermittel als miteinander verrastende Führungs- und/oder Positioniermittel ausgebildet. Diese können nur durch Verwendung eines speziellen Werkzeugs voreinander gelöst werden.

Beispiele für solche Führungs- und/oder Positioniermittel sind Rasthaken und/oder Raststifte und/oder Rastzungen oder dergleichen mit entsprechenden Gegenelementen in Form von Einrast- und/oder Einstecköffnungen. Diese stehen beispielsweise von den Trennkanten der entsprechenden Teilelemente ab und geraten miteinander in Eingriff bei zusammenführen der Einzelelemente. Gleichzeitig werden die Einzelelemente zueinander korrekt positioniert. Dadurch ergibt sich als zusätzliche Möglichkeit eine Kabel-/Leitungseinführung für den Einsatz in explosionsgefährdeten Bereichen, die eine entsprechende Schutzart realisiert oder auch Explosionsschutzbedingungen wie Ex-i oder Ex-e. Die Einzelelemente sind nur durch Verwendung eines entsprechenden Werkzeugs voneinander trennbar und sind ohne Lösen entsprechender Kabel oder Leitungen in der entsprechenden Wandöffnung einer Gehäusewand anordbar. Die Befestigung erfolgte da in üblicherweise sowohl durch Aufschrauben des Klemmteils als auch des Spannstücks.

Im Folgenden werden vorteilhafte Ausführungsbeispiele der Erfindung anhand der in der Zeichnung beigefügten Figuren näher erläutert.

Es zeigen:
- Figur 1: eine Seitenansicht eines ersten Ausführungsbeispiels einer erfindungsgemäßen Kabel-/Leitungseinführung;
- Figur 2: eine Vorderansicht der Kabel-/Leitungseinführung nach Figur 1;
- Figur 3: einen Schnitt entlang der Linie III-III aus Figur 2;
- Figur 4: eine Seitenansicht eines zweiten Ausführungsbeispiels einer Kabel-/Leitungseinführung gemäß Erfindung in auseinandergezogener Darstellung.
- Figur 5: eine perspektivische Ansicht des Ausführungsbeispiels nach Figur 4, und
- Figur 6: eine perspektivische Ansicht eines weiteren Ausführungsbeispiels analog zu Figuren 4 und 5 für eine andere Zündschutzart.

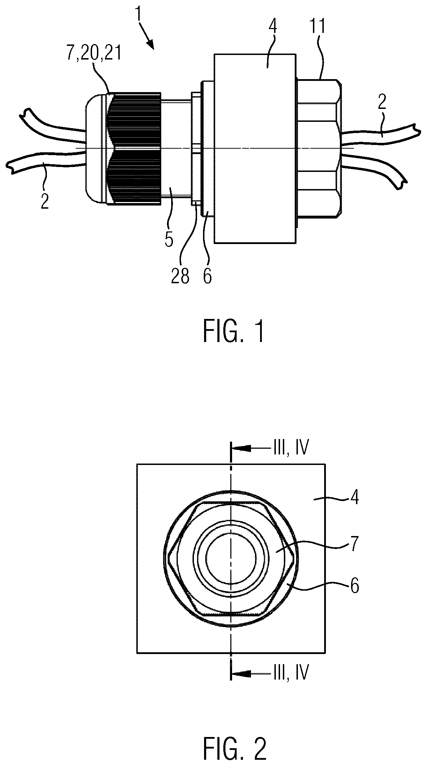

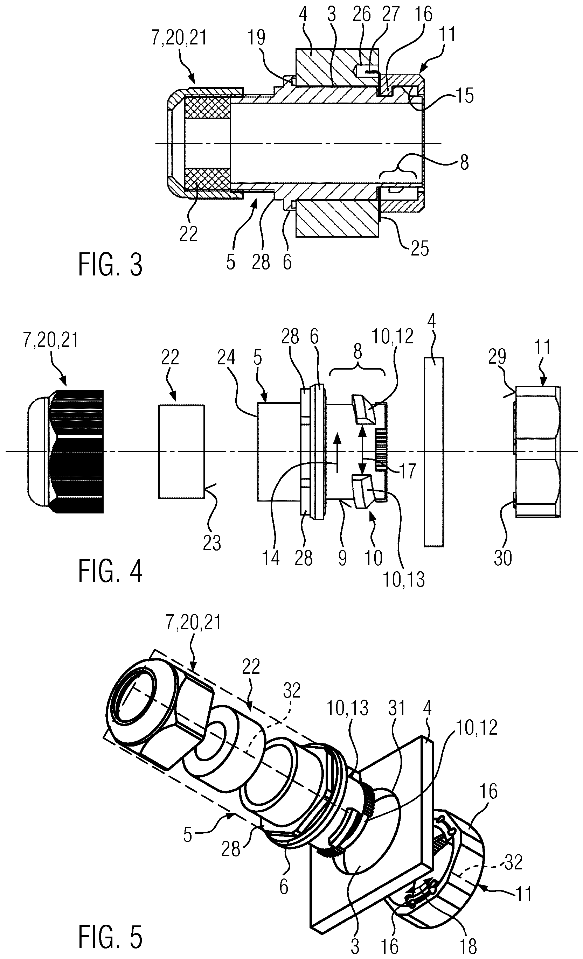

Figur 1 zeigt ein erstes Ausführungsbeispiel einer erfindungsgemäßen Kabel-/Leitungseinführung 1 in Seitenansicht. Von einer entsprechenden Gehäusewand 4 ist nur ein Teil dargestellt, der eine entsprechende Wandöffnung 3 aufweist, siehe auch Figur 3. Durch diese Wandöffnung 3 ist eine Einführhülse 5 als Teil der Kabel-/Leitungseinführung 1 durchgesteckt. An einem Ende der Einführhülse ist ein Klemmteil 7 aufgesetzt, das bei den dargestellten Ausführungsbeispielen als Mutter 20 und insbesondere Hutmutter 21 ausgebildet ist. Dieses Klemmteil 7 ist auf das entsprechende Ende der Einführhülse 5 aufgeschraubt. Von der Einführhülse 5 steht radial nach außen ein Anlageflansch 6 ab, der an einem entsprechenden Öffnungsrand 31, siehe auch Figur 5, anliegt. Benachbart und einteilig mit dem Anlageflansch 6 ist ein ebenfalls radial nach außen abstehender Schraubflansch 28 angeordnet. Die Einführhülse weist weiterhin einen Befestigungsabschnitt 8 auf, siehe beispielsweise 3, der im Gehäuseinneren aus der Wandöffnung 3 vorsteht und auf welchem ein Spannstück 11 angebracht ist. Durch das Anbringen des Spannstücks 11 auf dem Befestigungsabschnitt 8 erfolgt ein Anpressen des Anlageflansches 6 an den Öffnungsrand 31.

Im Prinzip sind in Figur 1 zwei Kabel beziehungsweise Leitungen 2 dargestellt, die durch die Kabel-/Leitungseinführung 1 von einer Außenseite eines Gehäuses durch die Wandöffnung 3 ins Innere des Gehäuses geführt sind.

Figur 2 zeigt eine Vorderansicht der Kabel-/Leitungseinführung 1 nach Figur 1. Erkennbar ist insbesondere auch der hexagonale Querschnitt des Klemmteils 7, das auf der Einführhülse 5 aufgeschraubt ist.

Im Übrigen wird auf die Beschreibung der Kabel-/Leitungseinführung 1 im Zusammenhang mit den anderen Figuren verwiesen.

Figur 3 zeigt einen Längschnitt durch die Kabel-/Leitungseinführung 1 nach Figur 1 entlang der Linie III-III aus Figur 2.

Zwischen dem Klemmteil 7 in Form einer Hutmutter 21 und der Einführhülse 5 ist eine Leitungsdichthülse 22 angeordnet, die bei einem entsprechenden Aufschrauben des Klemmteils 7 auf die Einführhülse 5 radial nach innen verformbar ist. Dadurch werden die entsprechenden Leitungen 2, siehe Figur 1, innerhalb der Leitungsdichthülse 22 geklemmt, sodass die entsprechende Kabel-/Leitungseinführung 1 gemäß Erfindung beispielsweise auch zur Zugentlastung dient.

Der Anlageflansch 6 weist auf seiner dem Öffnungsrand 31 zuweisenden Innenseite eine offene Dichtungsnut 19 auf, in die beispielsweise ein O-Ring als Dichtmittel einlegbar ist. Dieser ist in Figur 3 zur Vereinfachung nicht dargestellt.

Direkt anschließend und einteilig mit dem Anlageflansch 6 ist der Schraubflansch 28 ausgebildet, siehe auch Figur 1.

Die in Figur 3 dargestellte Kabel-/Leitungseinführung 1 ist als Ex-d-Einführung ausgebildet.

Auf dem Befestigungsabschnitt 8 der Einführhülse 5 ist Spannstück 11 angeordnet. Der Befestigungsabschnitt 8 weist einen in Umfangsrichtung 14, siehe auch Figur 4, teilweise umlaufenden Gewindegang 10 auf, der beispielsweise durch zwei Gewindegangabschnitte 12, 13 gebildet ist. Mit diesen Gewindegangabschnitten 12, 13 sind entsprechende Gegengewindeabschnitte 16 auf einer Hülseninnenseite 15 des hülsenförmig ausgebildeten Spannstücks 11 in Eingriff bringbar. Durch ein entsprechendes Verdrehen des Spannstücks 11 in Umfangsrichtung erfolgt ein Anpressen des Anlageflansches 6 an den Öffnungsrand 31. Die entsprechenden Gewindegangabschnitte 12, 13 können in Umfangsrichtung beabstandet zueinander angeordnet sein, siehe beispielsweise Figur 4 mit entsprechendem Abstand 17. Dabei können sich diese Gewindegangabschnitte 12, 13 auch wendelförmig in Richtung Anlageflansch 6 erstrecken. Beide Gewindegangabschnitte 12, 13 können auch jeweils für sich wendelförmig ausgebildet, aber im Wesentlichen in gleichem Abstand zum Anlageflansch 6 angeordnet sein.

Die Gegengewindeabschnitte 16 sind analog zu den Gewindegangabschnitten 12, 13 ausgebildet. Eine entsprechende Länge 18 eines jeden Gewinde/Gegengewindeabschnitts 16 ist geringer als der Abstand 17 zwischen benachbarten Gewindegangabschnitten 12, 13, sodass die Gegengewindeabschnitte 16 durch die Lücken zwischen den Gewindegangabschnitten 12, 13 einschiebbar und anschließend durch entsprechendes Verdrehen des Spannstücks 11 mit den Gewindegangabschnitten 12, 13 zum Anpressen des Anlageflansches 6 an den Öffnungsrand 31 in Eingriff bringbar sind.

Das Spannstück 11 weist auf seiner der Gehäusewand 4 zuweisenden Seite einen Anlagerand 29 auf, siehe auch Figur 4, der bei entsprechendem Eingriff der Gegengewindeabschnitte 16 mit den Gewindegangabschnitten 12, 13 an den inneren Öffnungsrand 31 der Wandöffnung 3 andrückbar ist. Zwischen Spannstück 11 und Gehäusewand 4 beziehungsweise Öffnungsrand 31 ist eine Sicherungseinrichtung in Form eines Sicherungsblechs 25 angeordnet. Dieses ist ebenfalls auf die Einführhülse 5 aufgesteckt und mit einer Sicherungsnase 27 in eine entsprechende Sicherungsöffnung 26 in der Gehäusewand 4 eingesteckt.

In Figur 4 ist ein weiteres Ausführungsbeispiel einer erfindungsgemäßen Kabel-/Leitungseinführung 1 dargestellt. Diese ist im Wesentlichen analog zur Kabel-/Leitungseinführung 1 nach Figur 3 aufgebaut. Der Unterschied besteht im Wesentlichen in der dünneren Gehäusewand 4 und der Ausführung der Kabel-/Leitungseinführung 1 in einer anderen Zündschutzart, nämlich Ex-e. Ein entsprechendes Sicherungsblech 25 ist bei dem Ausführungsbeispiel nach Figur 4 nicht dargestellt, kann aber bei Bedarf ebenfalls verwendet werden.

Der entsprechende Abschnitt der Einführhülse 5 zwischen Anlageflansch 6 und den Gewindegangabschnitten 12, 13 weist eine geringere Länge als in Figur 3 auf. Entsprechend ist die Gehäusewand 4 mit geringerer Dicke ausgebildet. Im Übrigen entspricht der Aufbau der Kabel-/Leitungseinführung 1 dem nach Figur 3 und es wird auf die entsprechende Beschreibung in Zusammenhang mit dieser Figur oder auch mit den Figuren 1 und 2 verwiesen.

In Figur 5 ist eine perspektivische Darstellung der Kabel-/Leitungseinführung 1 nach Figur 4 dargestellt. Insbesondere, siehe auch Figur 4, sind zwei Gewindegangabschnitte 12, 13 sichtbar, die sich in Umfangsrichtung 14 auf einer entsprechenden Außenseite 9 der Einführhülse 5 erstrecken. Statt zwei Gewindegangabschnitten 12, 13 können ebenfalls drei oder vier Gewindegangabschnitte vorgesehen sein, die analog in Umfangsrichtung 14 hintereinander und beabstandet voneinander angeordnet sind. Entsprechend zur Anzahl der Gewindegangabschnitte weist das Spannstück 11 auf seiner Hülseninnenseite 15 eine höchstens genauso große Anzahl von Gegengewindeabschnitten 16 auf. Diese sind mit entsprechender Länge 18 ausgebildet, die geringer als ein entsprechender Abstand 17, siehe Figur 4, zwischen benachbarten Gewindegangabschnitten 12, 13 ist. Auf diese Weise sind die Gegengewindeabschnitte 16 zwischen benachbarten Gewindegangabschnitten 12, 13 durchführbar und anschließend durch Verdrehen des Spannstücks 11 mit den Gewindegangabschnitten 12, 13 in Eingriff und Anlage bringbar.

Das Spannstück 11 weist bei einigen Ausführungsbeispielen gemäß Erfindung einen Anlagerand 29 auf, der stellenweise Eingriffsabschnitte 30 aufweist. Diese sind in einen Spalt zwischen Außenseite 9 der Einführhülse 5 und Innenseite der Wandöffnung 3 einsteckbar. Dadurch kann eine entsprechende Zentrierung der Einführhülse 5 innerhalb der Wandöffnung 3 erfolgen.

In Figur 5 ist weiterhin eine Trennungslinie 32 dargestellt, die sich im Wesentlichen in Axialrichtung der Kabel-/Leitungseinführung erstreckt. Diese Trennungslinie 32 kennzeichnet ein weiteres Ausführungsbeispiel vorliegender Erfindung, bei dem Klemmteil 7, Leitungsdichthülse 22, Einführhülse 5, und Spannstück 11 aus zumindest zwei Teilelementen aufgebaut sind. Diese Teilelemente bilden beispielsweise Halbschalen, die jeweils einer Hälfte von Klemmteil 7, Leitungsdichthülse 22, Einführhülse 5 und Spannstück 11 entsprechen. Die entsprechenden Teilelemente sind entlang ihrer Trennkanten miteinander mittels entsprechender Führungs- und/oder Positioniermittel miteinander verrastend verbindbar. Entsprechende Rastverbindungen sind durch Rasthaken, Raststifte, Rastzungen oder dergleichen gebildet, die mit entsprechenden Gegenelementen in Form von Einrast-und/oder Einstecköffnungen in Eingriff bringbar sind. Satt entsprechender Rastzungen sind auch Einsteckzungen verwendbar. Die Rastelemente verhindern ein Lösen der Teilelemente voneinander, wobei dies ein Lösen nur durch Verwendung eines entsprechenden Spezialwerkzeugs möglich ist. Dadurch ist auch bei einer solchen Teilung der verschiedenen Elemente in Teilelemente die erfindungsgemäße Kabel-/Leitungseinführung in explosionsgefährdeten Bereichen einsetzbar. Es besteht weiterhin die Möglichkeit, zusätzlich eine Dichtstruktur zwischen den Einzelelementen anzuordnen, die eine Abdichtung der entsprechenden Leitungen gegenüber dem Außenraum bildet.

Die Teilelemente sind auf eine mit einer entsprechenden elektrischen oder elektronischen Vorrichtung verbundener Leitung von außen und von gegenüberliegenden Seiten auf die Leitung aufsetzbar. Die entsprechenden Führungs- und/oder Positioniermittel werden bei Annäherung der Einzelelemente miteinander verbunden und ermöglichen dann in üblicherweise ein Aufschrauben des Klemmteils 7 auf die Einführhülse 5 bzw. ein Aufschrauben des Spannstücks 11 auf den teilweise umlaufenden Gewindegang 10.

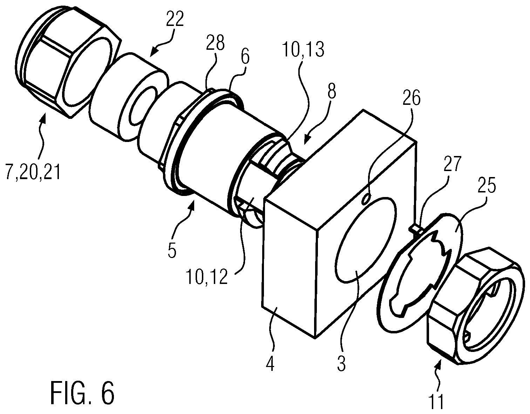

In Figur 6 ist ein weiteres Ausführungsbeispiel der erfindungsgemäßen Kabel-/Leitungseinführung 1 dargestellt. Dieses unterscheidet sich von dem Ausführungsbeispiel nach Figur 5 durch eine andere Zündschutzart, nämlich Ex-d. Ansonsten entspricht der Aufbau im Wesentlichen dem nach Figur 5, wobei, siehe auch Figur 3, der im Wesentlichen in der Wandöffnung 3 angeordnete Abschnitt der Einführhülse 5 eine größere Länge als bei Figur 5 aufweist. Weiterhin ist in Figur 6 wiederum ein Sicherungsblech 25 vorgesehen, siehe auch Figur 3, welches mit seiner Sicherungsnase 27 in einer entsprechenden Sicherungsöffnung 26 anordbar ist. Im Übrigen entspricht der Aufbau der Kabel-/Leitungseinführung 1 nach Figur 6 dem nach Figur 5. Dies gilt auch für die Anordnung der Leitungsdichthülse 22 im Wesentlichen im Inneren der Hutmutter 21, sodass die Leitungsdichthülse 22 mit Ihrem Innenende 23, siehe auch Figur 4, an einer entsprechenden Stirnseite 24 der Einführhülse 5 anliegt und bei entsprechendem Aufschrauben der Hutmutter 22 radial nach innen verformbar ist.

Die erfindungsgemäßen Ausführungsbeispiele der Kabel-/Leitungseinführung zeichnen sich durch einen einfachen Aufbau insbesondere im Bereich des Befestigungsabschnitts 8 auf, sodass auf diesen ein entsprechendes Spannstück 11 einfach aufsetzbar und dort schnell befestigbar ist. Im Übrigen wird die Einführhülse 5 einfach in eine Wandöffnung 3 eingesteckt und dann anschließend durch das Aufschieben und Verdrehen des Spannstücks 11 in der Wandöffnung 3 unter Bereitstellung einer entsprechenden Zündschutzart, siehe insbesondere Ex-d oder Ex-e, festgelegt.

## Patentansprüche

1. Kabel-/Leitungseinführung (1) zum Einführen und Durchführen wenigstens einer Leitung (2) in und durch eine Wandöffnung (3) einer Gehäusewand (4) mit einer Einführhülse (5) zum Einstecken in die Wandöffnung (3), einem von dieser zumindest stellenweise radial nach außen abstehenden Anlageflansch (6), einem in Richtung Anlageflansch (6) auf die Einführhülse (5) aufschraubbaren Klemmteil (7) und einem gegenüberliegend zum Klemmteil (7) angeordneten Befestigungsabschnitt (8) der Einführhülse (5),
**dadurch gekennzeichnet, dass**
der Befestigungsabschnitt (8) auf seiner Außenseite (9) einen einzelnen in Umfangsrichtung teilweise umlaufenden Gewindegang (10) aufweist, der aus wenigstens zwei beabstandeten Gewindegangabschnitten (12, 13) gebildet ist mit welchem ein Spannstück (11) zum Anpressen des Anlageflansches (6) an einen Öffnungsrand (31) der Wandöffnung (3) in Eingriff bringbar ist.

2. Kabel-/Leitungseinführung (1) nach Anspruch 1, **dadurch gekennzeichnet, dass** sich die Gewindeabschnitte jeweils um weniger als 180° in Umfangsrichtung der Einführhülse (5) erstrecken.

3. Kabel-/Leitungseinführung (1) nach Anspruch 1 oder 2, **dadurch gekennzeichnet, dass** die Gewindegangabschnitte (12, 13) in Umfangsrichtung (14) beabstandet und mit gleichem Abstand zum Anlageflansch oder wendelförmig hintereinander angeordnet sind.

4. Kabel-/Leitungseinführung (1) nach einem der vorangehenden Ansprüche,
**dadurch gekennzeichnet, dass** das Spannstück (11) als hülsenförmiges Spannstück ausgebildet ist, welches auf seiner Hülseninnenseite (15) wenigstens zwei mit den Gewindegangabschnitten (12, 13) in Eingriff bringbare Gegengewindeabschnitte (16) aufweist.

5. Kabel-/Leitungseinführung (1) nach Anspruch 4, **dadurch gekennzeichnet, dass** Abstände (17) zwischen den Gewindegangabschnitten (12, 13) größer als eine Länge der Gegengewindeabschnitte (16) ist.

6. Kabel-/Leitungseinführung (1) nach einem der vorangehenden Ansprüche,
**dadurch gekennzeichnet, dass** der Anlageflansch (6) eine in Richtung Öffnungsrand (31) offene Dichtnut (19) aufweist.

7. Kabel-/Leitungseinführung (1) nach einem der vorangehenden Ansprüche,
**dadurch gekennzeichnet, dass** das Klemmteil (7) als auf die Einführhülse (5) aufschraubbare Mutter (20) ausgebildet ist.

8. Kabel-/Leitungseinführung (1) nach Anspruch 7, **dadurch gekennzeichnet, dass** die Mutter (20) eine Hutmutter (21) ist und in dieser eine insbesondere verformbare Leitungsdichthülse (22) anordbar ist.

9. Kabel-/Leitungseinführung (1) nach Anspruch 8, **dadurch gekennzeichnet, dass** die Leitungsdichthülse (22) bei aufgeschraubter Hutmutter (21) mit ihrem Innenende (23) mit einer Stirnseite (24) der Einführhülse (5) in Anlage ist.

10. Kabel-/Leitungseinführung (1) nach einem der vorangehenden Ansprüche,
**dadurch gekennzeichnet, dass** ein Sicherungsblech (25) zur Anordnung zwischen Spannstück (11) und Gehäusewand (4) auf der Einführhülse (5) aufsteckbar ist.

11. Kabel-/Leitungseinführung (1) nach Anspruch 10,
**dadurch gekennzeichnet, dass** das Sicherungsblech (25) eine in eine Sicherungsöffnung (26) in der Gehäusewand (4) einsteckbare Sicherungsnase (27) aufweist.

12. Kabel-/Leitungseinführung (1) nach Anspruch 11, **dadurch gekennzeichnet, dass** die Einführhülse (5) einen nach außen abstehenden Schraubflansch (28) aufweist, welcher insbesondere einteilig mit dem Anlageflansch (6) ausgebildet ist.

13. Kabel-Leitungseinführung (1) nach einem der vorangehenden Ansprüche,
**dadurch gekennzeichnet, dass** das Spannstück (11) einen zumindest teilweise umlaufenden Anlagerand (29) zur Anlage an die Gehäusewand (4) und insbesondere an den Öffnungsrand (31) aufweist, welcher
Anlagerand (29) insbesondere zumindest einen Eingriffsabschnitt (30) zum Eingriff in die Wandöffnung (3) zwischen Einführhülse (5) und Öffnungsrand (31) aufweist.

14. Kabel-/Leitungseinführung (1) nach Anspruch 8,
**dadurch gekennzeichnet, dass** Einführhülse (5) mit Anlageflansch (6), Klemmteil (7), Spannstück (11) und Leitungsdichthülse (22) aus zumindest zwei im Wesentlichen in Axialrichtung der Kabel-/Leitungseinführung (1) geteilten Einzelelementen zusammensetzbar sind und entlang entsprechender Trennkanten dieser Einzelelemente zu deren positionsgenauem Zusammensetzen Führungs- und/oder Positionsmittel angeordnet sind.

15. Kabel-/Leitungseinführung (1) nach Anspruch 14, **dadurch gekennzeichnet, dass** die Kabel-/Leitungseinführung (1) in explosionsgefährdeten Bereichen einsetzbar ist und die Führungs- und/oder Positioniermittel an gegenüberliegenden Trennkanten als miteinander verrastende Führungs- und/oder Positioniermittel ausgebildet sind, wobei diese insbesondere als Rasthaken und/oder Raststifte und/oder Einsteckzungen oder dergleichen mit entsprechenden Gegenelementen in Form von Einrast- und/oder Einstecköffnungen ausgebildet sind.

## Claims

1. Cable/lead insertion unit (1) for inserting and guiding at least one lead (2) into and through a wall opening (3) in a housing wall (4), having an insertion sleeve (5) for inserting into the wall opening (3), an abutment flange (6) protruding radially outwards at least partially from said insertion sleeve, a clamping part (7) which can be screwed onto the insertion sleeve (5) in the direction of the abutment flange (6), and a fastening section (8) of the insertion sleeve (5) arranged opposite the clamping part (7),
**characterized in that,**
on its outer side (9), the fastening section (8) has a single thread (10) which runs partially around in the circumferential direction and is formed from at least two spaced-apart thread sections (12, 13) with which a clamping piece (11) for pressing the abutment flange (6) against an opening edge (31) of the wall opening (3) can be brought into engagement.

2. Cable/lead insertion unit (1) according to Claim 1, **characterized in that** the threaded sections each extend by less than 180° in the circumferential direction of the insertion sleeve (5).

3. Cable/lead insertion unit (1) according to Claims 1 or 2, **characterized in that** the thread sections (12, 13) are spaced apart in the circumferential direction (14) and are arranged at the same distance from the abutment flange or helically one after the another.

4. Cable/lead insertion unit (1) according to any one of the preceding claims, **characterized in that** the clamping piece (11) is designed as a sleeve-shaped clamping piece which has on its sleeve inner face (15) at least two counter-thread sections (16) which can be brought into engagement with the thread sections (12, 13).

5. Cable/lead insertion unit (1) according to Claim 4, **characterized in that** distances (17) between the thread sections (12, 13) are greater than a length of the counter-thread sections (16).

6. Cable/lead insertion unit (1) according to any one of the preceding claims, **characterized in that** the abutment flange (6) has a sealing groove (19) which is open in the direction of the opening edge (31).

7. Cable/lead insertion unit (1) according to any one of the preceding claims, **characterized in that** the clamping part (7) is designed as a nut (20) which can be screwed onto the insertion sleeve (5).

8. Cable/lead insertion unit (1) according to Claim 7, **characterized in that** the nut (20) is a cap nut (21), and an in particular deformable lead sealing sleeve (22) can be arranged therein.

9. Cable/lead insertion unit (1) according to Claim 8, **characterized in that** when the cap nut (21) is screwed on, the inner end (23) of the lead sealing sleeve (22) is in contact with an end face (24) of the insertion sleeve (5).

10. Cable/lead insertion unit (1) according to any one of the preceding claims, **characterized in that** a securing plate (25) for arrangement between the clamping piece (11) and the housing wall (4) can be fitted onto the insertion sleeve (5).

11. Cable/lead insertion unit (1) according to Claim 10,
**characterized in that** the securing plate (25) has a securing lug (27) which can be inserted into a securing opening (26) in the housing wall (4).

12. Cable/lead insertion unit (1) according to Claim 11, **characterized in that** the insertion sleeve (5) has an outwardly projecting screw flange (28), which is designed in particular in one piece with the abutment flange (6).

13. Cable/lead insertion unit (1) according to any one of the preceding claims, **characterized in that** the clamping piece (11) has an at least partially circumferential abutment edge (29) for abutment against the housing wall (4) and in particular against the opening edge (31), the abutment edge (29) in particular having between insertion sleeve (5) and opening edge (31) at least one engagement section (30) for engagement into the wall opening (3).

14. Cable/lead insertion unit (1) according to Claim 8,
**characterized in that** the insertion sleeve (5) with abutment flange (6), clamping part (7), clamping piece (11) and lead sealing sleeve (22) can be assembled from at least two individual elements divided substantially in the axial direction of the cable/lead insertion unit (1) and guidance and/or positioning means are arranged along corresponding parting edges of these individual elements for their positionally accurate assembly.

15. Cable/lead insertion unit (1) according to Claim 14, **characterized in that** the cable/lead insertion unit (1) can be used in areas at risk of explosion, and the guidance and/or positioning means at opposite parting edges are designed as interlocking guidance and/or positioning means, wherein these are formed in particular as latching hooks and/or latching pins and/or insertion tongues or the like with corresponding mating elements in the form of latching and/or insertion openings.

## Revendications

1. Entrée de ligne/câble (1) pour introduire et faire passer au moins une ligne (2) dans et à travers un orifice de paroi (3) d'une paroi de boîtier (4) comprenant un manchon d'introduction (5) pour l'insertion dans l'orifice de paroi (3), une bride d'appui (6) s'étendant au moins par endroits à partir de celui-ci radialement vers l'extérieur, un élément de serrage (7) pouvant être vissé en direction de la bride d'appui (6) sur le manchon d'introduction (5) et une partie de fixation (8) du manchon d'introduction (5) disposée à l'opposé de l'élément de serrage (7),
**caractérisée en ce que**
la partie de fixation (8) présente, sur son côté externe (9), un pas de filetage (10) individuel s'étendant partiellement dans la direction circonférentielle, qui est conçu à partir d'au moins deux parties de pas de filetage (12, 13) espacées, avec lequel une pièce de serrage (11) peut venir en prise pour presser la bride d'appui (6) au niveau d'un bord d'orifice (31) de l'orifice de paroi (3).

2. Entrée de ligne/câble (1) selon la revendication 1, **caractérisée en ce que** les parties de filetage s'étendent respectivement sur moins de 180° dans la direction circonférentielle du manchon d'introduction (5).

3. Entrée de ligne/câble (1) selon la revendication 1 ou 2, **caractérisée en ce que** les parties de pas de filetage (12, 13) sont disposées espacées dans la direction circonférentielle (14) et avec une distance identique par rapport à la bride d'appui ou consécutivement en forme d'hélice.

4. Entrée de ligne/câble (1) selon l'une quelconque des revendications précédentes, **caractérisée en ce que** la pièce de serrage (11) est conçue comme une pièce de serrage en forme de manchon, qui présente sur son côté interne de manchon (15) au moins deux parties de contre-filetage (16) pouvant venir en prise avec les parties de pas de filetage (12, 13).

5. Entrée de ligne/câble (1) selon la revendication 4, **caractérisée en ce que** les distances (17) entre les parties de pas de filetage (12, 13) sont supérieures à une longueur de la partie de contre-filetage (16).

6. Entrée de ligne/câble (1) selon l'une quelconque des revendications précédentes, **caractérisée en ce que** la bride d'appui (6) présente une gorge d'étanchéité (19) ouverte en direction du bord d'orifice (31).

7. Entrée de ligne/câble (1) selon l'une quelconque des revendications précédentes, **caractérisée en ce que** l'élément de serrage (7) est conçu comme un écrou (20) pouvant être vissé sur le manchon d'introduction (5).

8. Entrée de ligne/câble (1) selon la revendication 7, **caractérisée en ce que** l'écrou (20) est un écrou borgne (21) et un manchon d'étanchéité de ligne (22) en particulier déformable peut être disposé dans celui-ci.

9. Entrée de ligne/câble (1) selon la revendication 8, **caractérisée en ce que** le manchon d'étanchéité de ligne (22) est en appui avec son extrémité interne (23) avec un côté (24) du manchon d'introduction (5) lorsque l'écrou borgne (21) est vissé.

10. Entrée de ligne/câble (1) selon l'une quelconque des revendications précédentes, **caractérisée en ce qu'**une plaque de fixation (25) devant être disposée entre la pièce de serrage (11) et la paroi de boîtier (4) peut être placée sur le manchon d'introduction (5).

11. Entrée de ligne/câble (1) selon la revendication 10,
**caractérisée en ce que** la plaque de fixation (25) présente un nez de fixation (27) pouvant être inséré dans une ouverture de fixation (26) dans la paroi de boîtier (4).

12. Entrée de ligne/câble (1) selon la revendication 11, **caractérisée en ce que** le manchon d'introduction (5) présente une bride à vis (28) en saillie vers l'extérieur, qui est conçue en particulier d'un seul tenant avec la bride d'appui (6).

13. Entrée de ligne/câble (1) selon l'une quelconque des revendications précédentes, **caractérisée en ce que** la pièce de serrage (11) présente un bord d'appui (29) s'étendant au moins partiellement pour l'appui sur la paroi de boîtier (4) et en particulier sur le bord d'orifice (31), lequel bord d'appui (29) présente en particulier au moins une partie de mise en prise (30) pour venir en prise dans l'orifice de paroi (3) entre le manchon d'introduction (5) et le bord d'orifice (31).

14. Entrée de ligne/câble (1) selon la revendication 8,
**caractérisée en ce que** le manchon d'introduction (5) avec la bride d'appui (6), l'élément de serrage (7), la pièce de serrage (11) et le manchon d'étanchéité de ligne (22) peuvent être assemblés à partir d'au moins deux éléments individuels séparés essentiellement dans la direction axiale de l'entrée de ligne/câble (1) et le long d'arêtes de séparation correspondantes de ces éléments individuels, des moyens de guidage et/ou de positionnement sont disposés pour leur assemblage avec un positionnement précis.

15. Entrée de ligne/câble (1) selon la revendication 14, **caractérisée en ce que** l'entrée de ligne/câble (1) peut être utilisée dans des zones à risque d'explosion et les moyens de guidage et/ou de positionnement sont conçus sur des arêtes de séparation opposées sous forme de moyens de guidage et/ou de positionnement pouvant s'emboîter ensemble, ceux-ci étant conçus en particulier sous forme de crochets d'encliquetage et/ou de goupilles d'encliquetage et/ou de languettes enfichables ou similaire avec des contre-éléments correspondants sous forme d'ouvertures d'encliquetage et/ou d'insertion.
